# EUROPÄISCHE PATENTANMELDUNG

(11) **EP 1 160 035 A1**
(43) Veröffentlichungstag der Anmeldung: **05.12.2001**
(21) Anmeldenummer: 01113255.2
(22) Anmeldetag: 31.05.2001
(51) Int. Cl.: B23B 5/16

(54) **Kompaktes Schälgerät zum Schälen eines Rohres oder Kabels**

(30) Priorität: 02.06.2000 DE 20009768 U
(71) Anmelder: Golletz, Paul T., 61348 Bad Homburg (DE)
(72) Erfinder: Golletz, Paul T., 61348 Bad Homburg (DE)
(74) Vertreter: Mierswa, Klaus, Dipl.-Ing.

(57) **Zusammenfassung**

Die Erfindung betrifft ein kompaktes Schälwerkzeug (1) zum Abschälen oder Einschneiden der äußeren Sicht oder Schichten eines Rohres oder Kabels (14), z.B. Oxidschichten eines Rohres oder Isolierschicht eines Elektrokabels, insbesondere an aus Platzgründen schwer zugänglichen Stellen. Ein erfindungsgemäßes Schälwerkzeug umfaßt mindestens einen Ring (2), in welchen das Rohr oder Kabel seitlich einführbar ist, ein Messer (10) und ein Aufhahmelager (12) für das Kabel oder Rohr. Der Schälvorgang wird durch eine Drehbewegung des Ringes gegenüber dem Kabel oder Rohr ausgeführt. Hierdurch ist es möglich, beliebige Bereiche der Kabel- bzw. Rohroberfläche zu schälen.

## Beschreibung

Die Erfindung betrifft ein kompaktes Schälwerkzeug zum Schälen eines Rohres, insbesondere eines solchen, das aus Kunststoff besteht oder eine Mantelschicht aus Kunststoff oder eine glasfaserverstärkte Schicht aufweist, oder eines Kabels, insbesondere zum Schälen von dessen Mantel- oder Isolierschicht.

### Stand der Technik:

In vielen Fällen, z.B. um Anschweißungen vornehmen zu können, ist es wünschenswert oder erforderlich, zumindest einen Teil einer äußeren Schicht, insbesondere eine Oxidschicht, von Rohren der eingangs genannten Art zu entfernen. In anderen Fällen ist es wünschenswert oder erforderlich, zumindest einen Teil einer äußeren Schicht von Kabeln, insbesondere der Mantel- oder Isolierschicht von Elektrokabeln, zu entfernen. Aus der DE 295 16 513.8 ist ein Schälgerät mit verfahrbarem Dorn und zwei schraubzwingenartig gegeneinander verschiebbaren Teilen bekannt. Bei diesem Gerät ist innerhalb des durch ein Prismen- oder Rollenlager des einen Zwingenteils und ein Gegenlager des anderen Zwingenteils gebildeten Aufnahmelagers ein Dorn angeordnet, der einen in Richtung seiner Längsachse sich erstreckenden zylindrischen Fortsatz aufweist, der das Aufnahmelager überragt und dessen Durchmesser dem lichten Innendurchmesser des Rohres entspricht. Das Rohr wird in axialer Richtung auf den Fortsatz aufgeschoben und nahe seines Endes durch den in dieser Richtung verfahrbaren Dorn bearbeitet.

Ein Nachteil des in der DE 295 16 513.8 beschriebenen Gerätes besteht darin, daß konstruktionsbedingt nur die Endbereiche eines Rohres bearbeitet werden können, wobei die axiale Ausdehnung der bearbeiteten Fläche durch den Verfahrweg des Dorns begrenzt ist.

Ein weiterer Nachteil des in der DE 295 16 513.8 beschriebenen Gerätes besteht in seiner Geometrie bzw. Bauform. In vielen Fällen ist es nämlich erforderlich oder wünschenswert, bereits in der Erde verlegte Kabel oder Rohre zonal zu schälen, wozu diese an den entsprechenden Stellen freigelegt werden müssen. In anderen Fällen ist es erforderlich oder wünschenswert, in Kabel- oder Rohrschächten bereits verlegte Kabel oder Rohre zonal zu schälen. In wiederum anderen Fällen kann es erforderlich sein, eines von zwei oder mehreren in geringem Abstand parallel verlaufenden Kabeln oder Rohren zonal zu schälen. In wiederum anderen Fällen kann es erforderlich sein, ein Kabel oder Rohr in unmittelbarer Nachbarschaft z.B. einer Gabelung, einer Verzweigung, eines 180°-Bogens oder einer Rohrschelle zonal zu schälen.

In derartigen Fällen sind die Platzverhältnisse, unter denen die Schälung vorgenommen werden muß, oftmals sehr beengt. Die Anwendung und Handhabung des in der DE 295 16 513.8 beschriebenen Gerätes bereitet unter solcherart beengten Platzverhältnissen aufgrund der Geometrie bzw. Bauform dieses Gerätes oftmals große Schwierigkeiten.

Der Erfindung liegt demzufolge die Aufgabe zugrunde, ein Schälwerkzeug für ein Kabel oder Rohr, insbesondere Kunststoffrohr oder kunststoffbeschichtetes Rohr, bereitzustellen, mit welchem beliebig wählbare und beliebig ausgedehnte Bereiche der äußeren Schicht oder Schichten eines Kabels oder Rohres der eingangs genannten Art abgeschält werden können, wobei die Funktionsweise des Schälwerkzeuges eine so kompakte Bauform erlaubt, daß dieses auch unter sehr beengten Platzverhältnissen ohne Beeinträchtigung seiner Funktion eingesetzt und gehandhabt werden kann.

Diese Aufgabe wird erfindungsgemäß gelöst durch ein kompaktes Schälwerkzeug zum Schälen oder Einschneiden einer äußeren Schicht oder von äußeren Schichten oder des Mantels eines Kabels oder Rohres, insbesondere Kunststoffrohr oder kunststoffbeschichtetes Rohr, gekennzeichnet durch
- einen Ring, welcher
   - entweder aufgrund einer im wesentlichen C-förmigen Gestaltung eine periphere Öffnung aufweist, durch welche das Kabel oder Rohr seitlich in den Ring einführbar ist, wobei der Ring das Kabel oder Rohr nach dessen Einführung in den Ring über einen Zentriwinkel von mehr als 180° umschließt und eine spielfreie Rundführung des Schälwerkzeuges um das Kabel oder Rohr erlaubt,
   - oder aus wenigstens zwei Teilen besteht, welche schwenkbar miteinander verbundenen sind, so daß sich der Ring in geöffnetem oder in geschlossenem Zustand befinden kann, wobei das Kabel oder Rohr im geöffneten Zustand des Rings seitlich in den Ring einführbar ist und im geschlossenen Zustand das Schälwerkzeug spielfrei um das Kabel oder Rohr rundführbar ist und die Teile im geschlossenen Zustand mittels einer lösbaren Verriegelung aneinander arretierbar sind,
- und ein am Ring angeordnetes Messer mit einer Schnittkante, welche den Innenkreis des Rings nach innen in Richtung des Kabels oder Rohres so weit überragt, daß die Schnittkante in die Oberfläche des Kabels oder Rohres einzudringen imstande ist.

Ein erfindungsgemäßes Schälwerkzeug eignet sich aufgrund seiner kompakten Bauweise insbesondere zum Einsatz an aus Platzgründen schwer zugänglichen Stellen des Kabels oder Rohres.

Zur Bearbeitung wird das Kabel bzw. Rohr durch die periphere Öffnung in das Aufhahmelager eingeführt und das erfindungsgemäße Schälwerkzeug so positioniert und ausgerichtet, daß sich der abzuschälende Bereich seiner Oberfläche, welcher sich erfindungsgemäß in beliebiger Entfernung zu einem Ende des Kabels bzw. Rohres befinden kann, im Bereich der Schnittkante des Messers befindet.

Eine Ausführungsform eines erfindungsgemäßen Schälwerkzeuges weist am Innenkreis des Ringes drei Auflager auf, welche ein Aufnahmelager zur Dreipunktlagerung und Rundführung des Schälwerkzeugs bezüglich des Kabels oder Rohres bilden und so angeordnet sind, daß sie den Innenkreis nach innen überragen, wobei zwei der Auflager als voneinander beabstandete untere Gleitlager oder untere Lagerollen ausgebildet sind und das dritte als am Kabel oder Rohr anliegendes Gegenlager fungiert und entweder als oberes Gleitlager oder obere Lagerrolle oder tangential am Kabel oder Rohr anliegende Vortriebsplatte ausgebildet und dem Mittelpunkt der Verbindungsstrecke der unteren Gleitlager oder Lagerrollen im wesentlichen gegenüberliegend angeordnet ist. Da das Gegenlager dem Mittelpunkt der Verbindungsstrecke der unteren Gleitlager oder unteren Lagerollen in Bezug auf die Achse des Kabels oder Rohres im wesentlichen gegenüberliegend angeordnet ist, ist eine stabile und statisch definierte Dreipunktlagerung des Kabels oder Rohres in dem Aufnahmelager gewährleistet.

Die Einführung des Kabels oder Rohres in den im wesentlichen C-förmigen Ring erfolgt durch die periphere Öffnung quer zur Achse des Kabels oder Rohres. Zur Einführung des Kabels oder Rohres durch die periphere Öffnung muß diese durch eine äußere Krafteinwirkung, unter elastischer Verformung des Ringes vorübergehend so aufgeweitet werden, daß das Kabel oder Rohr quer zu seiner Achse durch die Öffnung in das Aufnahmelager eingeführt werden kann. Nach Einführung des Rohres oder Kabels und anschließender Beendigung der äußeren Krafteinwirkung ist das Kabel oder Rohr stabil im Aufnahmelager aufgenommen.

In einer bevorzugten Ausführungsform der Erfindung sind die zwei der peripheren Öffnung zugewandten Auflager des Aufnahmelagers so angeordnet, daß das Rohr unter elastischer Aufweitung und anschließender Wiederverengung der peripheren Öffnung zwischen diesen beiden Aufnahmelager hindurch in den Ring eingeführt werden kann, ohne den Ring selbst zu berühren. Die Kraft zur Aufweitung der peripheren Öffnung kann somit im Zuge des Einführens des Rohres in den Ring durch einfaches seitliches Andrücken des Rohres gegen diese beiden Gegenlager aufgebracht werden.

In einer weiteren Ausgestaltung dieser Ausführungsform weist der Ring einen oder mehrere radial zur Achse des Kabels oder Rohres verlaufende, in Richtung der inneren Aussparung offene Federschlitze auf, durch welche die Eigensteifigkeit des Ringes gegenüber einer Aufweitung der Öffnung gezielt herabgesetzt ist. Hierdurch wird die Aufweitung der Öffnung und damit Einführung seitliche des Kabels oder Rohres durch die periphere Öffnung erleichtert.

In einer anderen Ausführungsform der Erfindung sind das Gegenlager und/oder die unteren Gleitlager oder unteren Lagerrollen mittels mindestens eines elastischen Bauelementes, insbesondere Druckfeder oder Tellerfeder, gegenüber dem Ring in bezüglich der Achse des Kabels oder Rohres radialer Richtung federnd angeordnet.

In den beiden letztgenannten Ausführungsformen ist somit die Weite des Aufnahmelagers elastisch veränderbar. Eine solche Elastizität des Aufnahmelagers erleichtert nicht nur die Einführung des Kabels oder Rohres durch die periphere Öffnung, sondern ermöglicht erfindungsgemäß insbesondere auch das Abschälen von Kabeln bzw. Rohren von unregelmäßig oder z.B. elliptisch verformter Querschnittsform, da das Gegenlager und/oder die unteren Gleitlager oder unteren Lagerrollen bei der Ausführung der unten noch näher erläuterten Rotationsbewegung eines erfindungsgemäßen Schälgerätes um das Kabel bzw. Rohr unter Ausnutzung dieser Elastizität auch einer verformten Kabel- bzw. Rohroberfläche folgen kann.

Eine Einführung des Kabels oder Rohres durch die periphere Öffnung ist ferner auch unter elastischer Verformung des Kabels oder Rohres möglich.

Das Messer ist erfindungsgemäß so angeordnet, daß seine Schnittkante den Ring nach innen in Richtung des Kabels oder Rohres so weit überragt, daß die Schnittkante in die Oberfläche des Kabels oder Rohres eindringt.

Wird nun das erfindungsgemäße Schälwerkzeug in der Ringebene gegenüber dem Kabel oder Rohr in einem z.B. manuell ausgeführten Drehvorgang um einen bestimmten Drehwinkel oder um eine volle Umdrehung um die Rohrachse gedreht, so wird von der Kabel- bzw. Rohroberfläche eine Schicht definierter Stärke entsprechend dem Drehwinkel und der Länge der Schnittkante konzentrisch zur Kabel- bzw. Rohrachse abgeschält, wobei die Breite der abgeschälten Schicht im wesentlichen der Breite der Schnittkante des Messers entspricht. Die so entstandene Vertiefung in der Kabel- bzw. Rohrwandung ist in beiden axialen Richtungen jeweils durch eine Stufe von der unbearbeiteten Kabel- bzw. Rohroberfläche abgesetzt.

Durch Verschieben des Schälwerkzeuges in axialer Richtung des Kabels oder Rohres und Wiederholung des Drehvorganges kann der geschälte Bereich der Kabel- oder Rohroberfläche beliebig vergrößert werden.

In einer bevorzugten Ausführungsform der Erfindung ist das Gegenlager in Form einer Vortriebsplatte ausgebildet, welche unter Druck am Kabel oder Rohr anliegt. Der mechanische Druck zwischen Vortriebsplatte und Kabel- oder Rohroberfläche kann auf verschiedene Weisen bewirkt werden.

In einer Ausführungsform der Erfindung ist die Vortriebsplatte und/oder die unteren Gleitlager bzw. unteren Lagerrollen mit Hilfe eines Verstellmechanismus in Richtung der Achse des Kabels oder Rohres so verstellbar eingerichtet, daß durch Betätigen des Verstellmechanismus ein mechanischer Druck zwischen der Vortriebsplatte und der Oberfläche des Kabels oder Rohres erzeugbar ist.

In einer bevorzugten Ausführungsform der Erfindung liegen die unteren Gleitlager oder unteren Lagerrollen und die Vortriebsplatte auf einer Kreislinie, deren Durchmesser im unbelasteten Zustand geringer ist als der Durchmesser des Kabels oder Rohres im unbelasteten Zustand, so daß die Vortriebsplatte auf im Aufnahmelager aufgenommene Kabel oder Rohr einen mechanischen Druck ausübt. Eine elastische Auslegung des Aufnahmelagers, wie oben unter Bezug auf bevorzugte Ausführungsformen beschrieben, wirkt sich auch hier vorteilhaft aus.

Die Vortriebsplatte weist erfindungsgemäß an ihrer dem Kabel oder Rohr zugewandten Oberfläche mindestens eine, vorzugsweise jedoch eine Mehrzahl länglicher Erhebungen oder Rinnen auf, die tangential zur Oberfläche des Rohres verlaufen und eine Ebene, welche auf der Achse des Kabels oder Rohres senkrecht steht, unter einem Winkel α schneiden, dessen Tangens kleiner oder gleich dem Verhältnis der Länge der Schnittkante zum Umfang des Kabels oder Rohres ist. Erfindungsgemäß entsteht somit während des Drehvorganges eine auf die Vortriebsplatte und somit auf das Schälwerkzeug in Achsenrichtung des Kabels oder Rohres wirkende Kraftkomponente, welche das Schälwerkzeug bei jeder Umdrehung um einen bestimmten Vorschub entlang des Kabels oder Rohres axial verschiebt. Das Messer führt somit entlang der Oberfläche des Kabels oder Rohres eine spiralförmige Bewegung aus, wobei die Vortriebsplatte vorteilhaft als Führung fungiert.

Aufgrund der erfindungsgemäßen Wahl des Winkels α ist der Vorschub des Schälwerkzeuges pro Umdrehung kleiner oder gleich der Länge der Schnittkante, so daß die Vertiefung in der Kabel- oder Rohroberfläche bei jeder vollen Umdrehung des Schälwerkzeuges um den Betrag des Vorschubes verbreitert wird, ohne daß zwischen den einzelnen Windungen der abgeschälten Spirale eine Stufe verbleibt. Auf diese Weise kann erfindungsgemäß im Zuge eines einzigen fortlaufenden Drehvorganges ein beliebig ausgedehnter Bereich der Kabel- bzw. Rohroberfläche geschält werden, wobei eine im wesentlichen glatte bearbeitete Oberfläche entsteht.

In einer weiteren Ausführungsform der Erfindung sind am Innenkreis des Ringes mindestens drei jeweils voneinander beabstandete Auflager so angeordnet, daß diese den Innenkreis nach innen überragen und am Kabel oder Rohr anliegen und ein Aufnahmelager zur spielfrei rotierbaren Lagerung und Rundführung des Schälwerkzeugs bezüglich des Kabels oder Rohres bilden. Die Auflager können insbesondere Gleitlager, Prismenlager oder Rollenlager sein.

Hierbei kann wenigstens eines, bevorzugterweise jedoch zwei der Auflager in einer Ebene liegen, welche senkrecht zur Achse des Kabels oder Rohres steht und die Schnittkante des Messers schneidet. Die beiden in dieser Ebene liegenden Auflager können insbesondere die beiden unteren Gleit- oder Rollenlager sein, während die Andruckplatte außerhalb dieser Ebene angeordnet sein kann.

Diese Ausführungsform ist insbesondere in Kombination mit einer weiteren Ausführungsform der Erfindung vorteilhaft, bei welcher die Schnittkante des Messers seitlich außerhalb des Rings angeordnet ist, da in diesem Fall bei Ausübung einer Andruckkraft auf das Messer in der Richtung der Kabel- oder Rohrachse die Gefahr einer Verkantung des Schälwerkzeuges gegenüber dem Kabel oder Rohr verringert ist.

Die Gefahr einer derartigen Verkantung ist zusätzlich verringert bei einer solchen weiteren Ausgestaltung dieser Ausführungsform der Erfindung, daß das Schälwerkzeug wenigstens ein, vorzugsweise zwei Zusatzauflager aufweist, welche den Innenkreis nach innen überragen, am Kabel oder Rohr anliegen und seitlich außerhalb des Ringes an derjenigen Seite des Rings angeordnet sind, welche von der Schnittkante abgewandt ist.

Kurzbeschreibung der Zeichnung, in der zeigen:
- Fig. 1: eine perspektivische Ansicht einer bevorzugten Ausführungsform eines erfindungsgemäßen Schälwerkzeuges,
- Fig.2: eine Seitenansicht des Schälwerkzeuges von Fig. 1, wobei der Griff 18, das Messer 10 und der Messerhalter 9 weggelassen sind,
- Fig. 3: eine Draufsicht auf die dem Kabel oder Rohr zugewandte Fläche der Vortriebsplatte des Schälwerkzeuges von Fig. 1,
- Fig. 4: einen Ausschnitt des oberen Teils Ringes von Fig. 1 mit Messerhalter, Messer und Griff, wobei die Vortriebsplatte weggelassen ist,
- Fig. 5: eine weitere Seitenansicht einer anderen Ausführungsform der Erfindung,
- Fig. 6: eine Draufsicht auf das Schälwerkzeug von Fig. 5, wobei dieses gegenüber Fig. 5 um 90° nach links gedreht ist,
- Fig. 7: eine Draufsicht auf das Schälwerkzeug von Fig. 6, wobei dieses gegenüber Fig. 6 um ca. 60° nach vorne gekippt ist, und
- Fig. 8: eine Seitenansicht einer weiteren Ausführungsform der Erfindung.

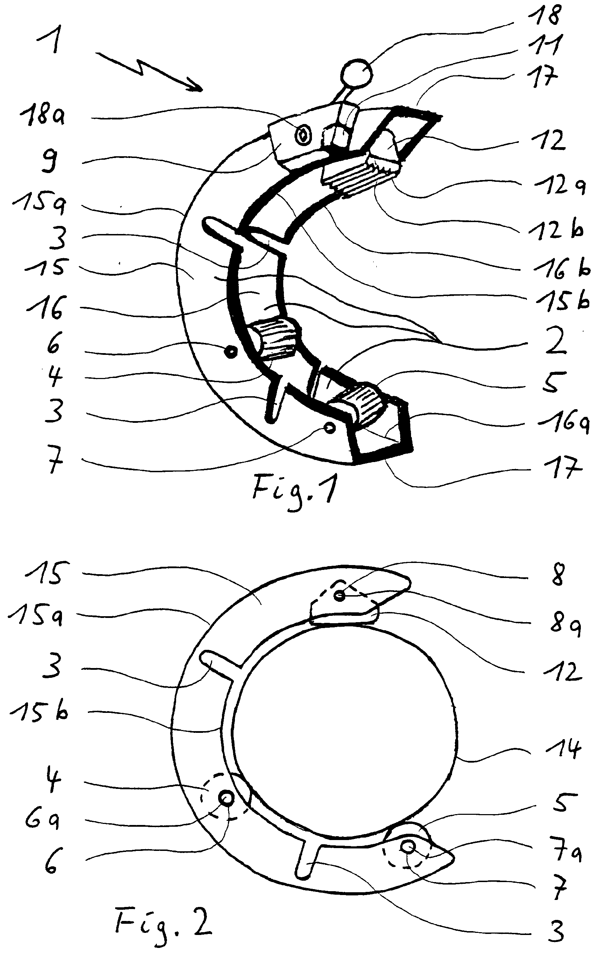

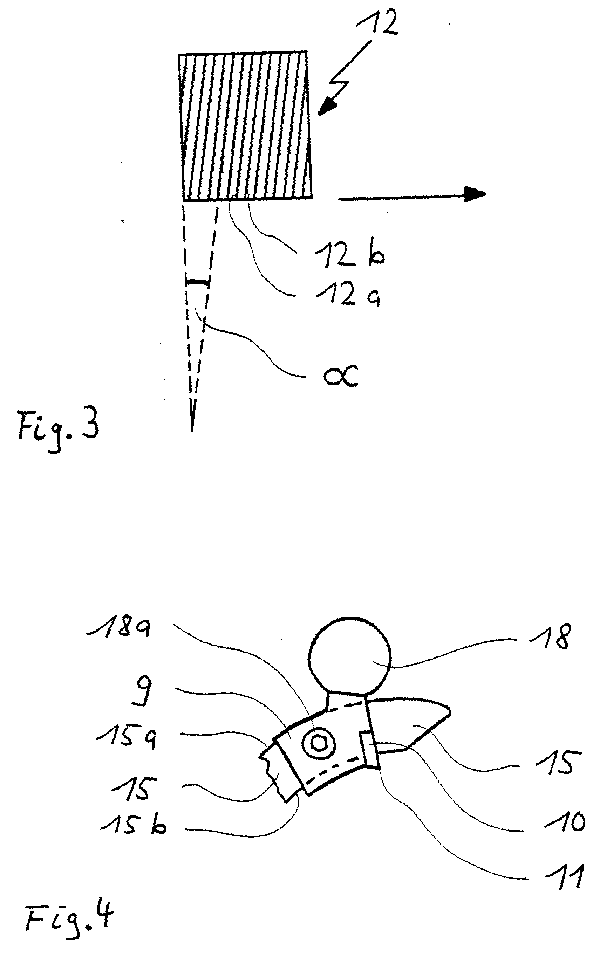

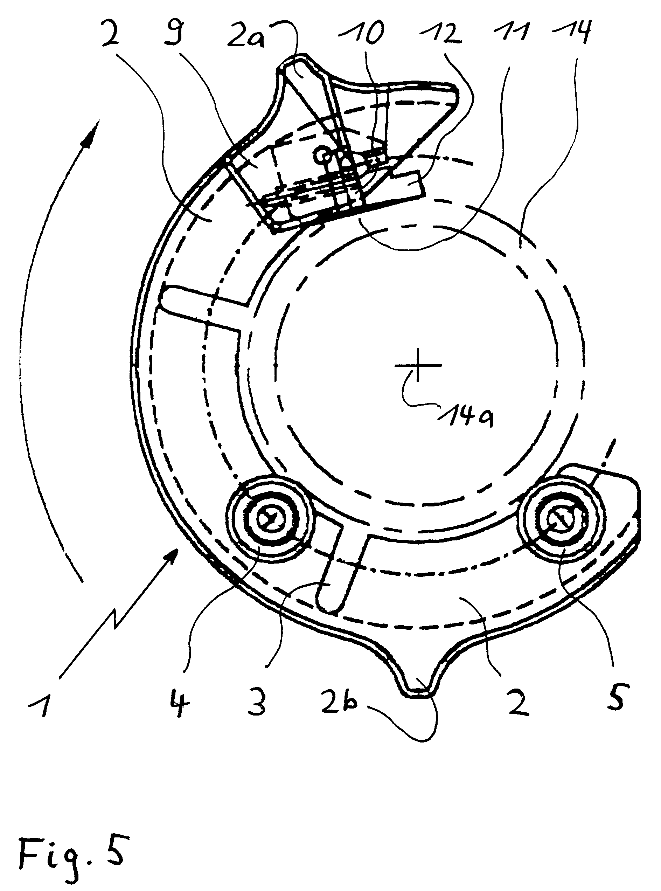

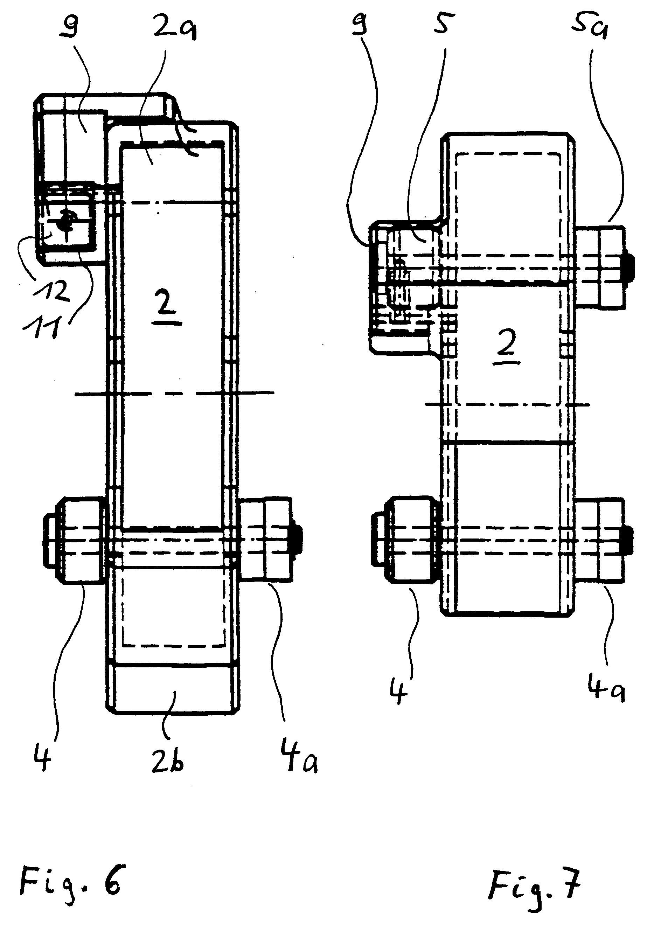

Fig. 1 zeigt eine perspektivische Ansicht und Fig. 2 eine Seitenansicht einer bevorzugten Ausführungsform eines erfindungsgemäßen Schälwerkzeuges 1, wobei der Griff 18, das Messer 10 und der Messerhalter 9 in Fig. 2 aus Gründen der Übersichtlichkeit weggelassen sind. Das Schälwerkzeug 1 umfaßt einen Ring 2, der zwei einander deckungsgleich gegenüberliegend angeordnete, voneinander parallel beabstandete, im wesentlichen C-förmige Seitenwände 15, 16 mit Außenkanten 15a, 16a und Innenkanten 15b, 16b sowie eine gekrümmte Rückwand 17 aufweist, die parallel zur Oberfläche des Kabels oder Rohres 14 (Fig. 2) zwischen den Außenkanten 15a, 16a der beiden Seitenwände 15, 16 verläuft und diese miteinander mechanisch verbindet.

Die Seitenwände 15,16 umgreifen eine innere Aussparung 19, welche zur Aufnahme des Kabels oder Rohres dient, und lassen einseitig eine Öffnung zur Einführung des Kabels oder Rohres in die innere Aussparung 19 frei.

Zwei untere Lagerrollen 4,5 und eine an der Oberfläche des Rohres oder Kabels tangential anliegende Vortriebsplatte 12, welche die Innenkanten 15b, 16b der Seitenwände 15, 16 jeweils nach innen in Richtung des Kabels oder Rohres überragen, bilden ein Aufnahmelager für das Kabel oder Rohr 14. Die Achsen der unteren Lagerrollen 4,5 sind so angeordnet, daß sie jeweils parallel zur Achse des Kabels oder Rohres 14 verlaufen und beide Seitenwände 15, 16 durchstoßen. Jede Seitenwand 15, 16 weist zwei Lagerbohrungen 6, 7 auf, in welchen je ein Achsbolzen 6a, 7a zur drehbaren Lagerung der Lagerrollen 4, 5 aufgenommen ist.

Die unteren Lagerrollen 4,5 und die Vortriebsplatte 12 sind vorzugsweise auf einer Kreislinie angeordnet, deren Durchmesser im unbelasteten Zustand geringer ist als der Durchmesser des Kabels oder Rohres 14 im unbelasteten Zustand. In diesem Fall sind das Schälwerkzeug 1 und das Kabel oder Rohr 14 bei in das Aufnahmelager eingeführtem Kabel oder Rohr unter Aufweitung der peripheren Öffnung elastisch verformt, so daß die Vortriebsplatte 12 am Kabel oder Rohr 14 unter Druck anliegt, wodurch vorteilhafterweise zugleich eine spielfreie Aufnahme des Kabels oder Rohres 14 im Aufnahmelager gewährleistet ist.

In einer bevorzugten Ausführungsform der Erfindung weisen die Seitenwände 15,16 je einen oder mehrere radial zur Achse des Kabels oder Rohres 14 verlaufende, in Richtung der Innenkanten 15b,16b offene Federschlitze 3 auf, durch welche die Eigensteifigkeit des Ringes 2 gegenüber einer Aufweitung der einseitigen Öffnung gezielt herabgesetzt ist. Hierdurch werden einerseits die Aufweitung der Öffnung und damit Einführung seitliche des Kabels oder Rohres durch die einseitige Öffnung erleichtert und andererseits die Schwankungen des Druckes zwischen Vortriebsplatte und Kabel- oder Rohroberfläche bei der Bearbeitung von Kabeln oder Rohren mit verformter Querschnittform oder über die Länge ungleichmäßigem Durchmesser verringert.

Eine ähnlich vorteilhafte Wirkung wird gemäß einer anderen Ausführungsform der Erfindung (nicht gezeigt) dadurch erreicht, daß das Gegenlager bzw. die Vortriebsplatte und/oder mindestens eine der unteren Gleitlager bzw. unteren Lagerrollen in bezüglich der Rohr- oder Kabelachse radialer Richtung elastisch gefedert angeordnet sind.

In einer weiteren Ausführungsform der Erfindung (nicht gezeigt) kann die Vortriebsplatte gegenüber dem Kabel oder Rohr dadurch mit Druck beaufschlagt werden, daß die Vortriebsplatte und/oder mindestens eine der unteren Gleitlager oder unteren Lagerrollen mittels eines Verstellmechanismus, insbesondere Spindel, bezüglich der Kabel- oder Rohrachse radial nach innen verstellbar sind.

Die Vortriebsplatte 12 weist an ihrer dem Kabel oder Rohr 14 zugewandten Oberfläche (Fig. 3) eine Mehrzahl eine länglicher, im wesentlichen prismenförmiger Erhebungen 12a oder Rinnen 12b auf, die tangential zur Oberfläche des Kabels oder Rohres 14 verlaufen und die Ringebene unter einem Winkel α (Fig. 3) schneidet, dessen Tangens kleiner oder gleich dem Verhältnis der Länge der Schnittkante 11 zum Umfang des Kabels oder Rohres 14 ist. Die Richtung, in der die Achse des Kabels oder Rohres verläuft, ist aus Gründen der Verständlichkeit in Fig. 3 durch einen Pfeil gekennzeichnet.

Die Vortriebsplatte 12 ist in einer bevorzugten Ausführungsform der Erfindung um eine zur Achse des Kabels oder Rohres 14 parallele Achse, welche beide Seitenwände 15, 16 durchstößt, schwenkbar gelagert. Jede Seitenwand 15,16 weist eine Pendelbohrung 8 auf, in welcher ein an der Vortriebsplatte 12 angeordneter, parallel zur Kabel- oder Rohrachse verlaufender Pendelbolzen 8a aufgenommen ist, mit dem die Vortriebsplatte 12 um dessen Achse schwenkbar im Ring 2 gelagert ist. Diese Schwenkbarkeit der Vortriebsplatte 12 erleichtert einerseits die Einführung des Rohres in das Aufnahmelager und gestattet andererseits, daß sich die Neigung der Vortriebsplatte 12 passiv an die Oberfläche von Kabeln oder Rohren 14 mit verformter, z.B. elliptischer Querschnittform anpaßt.

Vorzugsweise im Bereich der Vortriebsplatte 12 ist ein Messer 10 am Ring 2 angeordnet, dessen Schnittkante 11 der Ring 2 nach innen in Richtung des Kabels oder Rohres 14 so weit überragt, daß die Schnittkante 11 in die Oberfläche des Kabels oder Rohres 14 eindringt. In einer bevorzugten Ausführungsform der Erfindung ist das Messer 10 an einem mit Hilfe mindestens einer Befestigungsschraube 18a am Ring 2 befestigten Messerhalter 9 angebracht (Fig. 4). In einer anderen bevorzugten Ausführungsform der Erfindung (nicht gezeigt) ist das Messer 10 in bezüglich der Achse des Kabels oder Rohres 14 radialer Richtung verstellbar an dem Schälwerkzeug 1 angeordnet, so daß die Dicke der durch das Messer 10 abgetragenen Schicht veränderbar ist.

In einer bevorzugten Ausführungsform der Erfindung ist am Ring 2 oder am Messerhalter 9 (Fig. 4) ein Griff 18 zur Erleichterung des Ausführens einer Drehbewegung des Schälwerkzeuges 1 um das Kabel oder Rohr 14 angeordnet. Der Griff 18 ist zum Zweck einer für die manuelle Durchführung eines Schälvorganges nutzbringenden Kombination der Ausübung einer Drehkraft mit der Ausübung einer zusätzlichen Druckkraft auf die Vortriebsplatte 12 vorzugsweise im Bereich der Vortriebsplatte 12 am Ring 2 angeordnet.

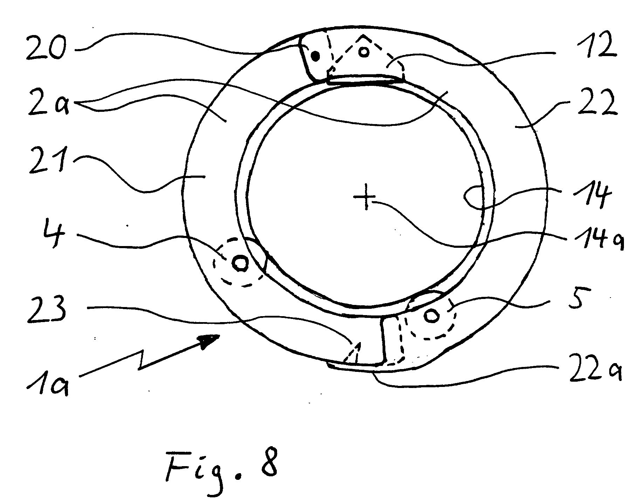

Nun wird Bezug genommen auf die Fig. 5, 6 und 7. Fig. 5 zeigt eine weitere Seitenansicht, Fig. 6 eine gegenüber Fig. 5 um 90° nach links gedrehte und Fig. 7 eine gegenüber Fig. 6 um ca. 60° nach vorne gekippte Draufsicht auf eine andere Ausführungsform der Erfindung, in welcher das Messer 10 und seine Schnittkante 11 sowie die beiden unteren Lagerrollen 4, 5 seitlich außerhalb des Rings 2 angeordnet sind, so daβ sie sich in der Blickrichtung von Fig. 5 vor und in den Blickrichtungen von Fig. 6 und Fig. 7 seitlich links von dem Ring 2 befinden, wobei in Fig. 6 die Lagerrolle 5 durch die Lagerrolle 4 verdeckt ist. Die Schnittkante 11 sowie die beiden unteren Lagerrollen 4, 5 liegen in einer Ebene, welche senkrecht zur Achse 14a des Rohres 14 steht und die Schnittkante 11 des Messers 10 schneidet. Die Andruckplatte 12 (in Fig. 6 nicht gezeigt) ist außerhalb dieser Ebene, in Fig. 5 hinter dem Messer, angeordnet.

Ein Vorteil dieser Ausführungsform besteht darin, daß bei Ausübung einer Andruckkraft auf das Messer 10 in der Richtung der Rohrachse 14a die Gefahr einer Verkantung des Schälwerkzeuges 1 gegenüber dem Rohr 14 verringert ist.

Die Gefahr einer derartigen Verkantung ist zusätzlich verringert durch zwei Zusatzauflager, welches hier in Form von Zusatzrollen 4a, 5a ausgebildet sind, die ebenfalls am Rohr 14 anliegen, den Innenkreis ebenso wie die unteren Lagerrollen 4, 5 nach innen überragen und seitlich außerhalb des Ringes 2 an derjenigen Seite des Rings 2 angeordnet sind, welche von der Schnittkante 11 und den unteren Lagerrollen 4, 5 abgewandt ist. Die Achsen der unteren Lagerrolle 4 und der Zusatzrolle 4a fallen in der Ausführungsform von Fig. 5 bis 7 zusammen, ebenso die Achsen unteren Lagerrolle 5 und der Zusatzrolle 5a, so daß sich die Zusatzrollen 4a bzw. 5a in Fig. 5 hinter den unteren Lagerrollen 4 bzw. 5 befinden und verdeckt sind. In Fig. 6 sind die Lagerrolle 5 durch die Lagerrolle 4 und die Zusatzrolle 5a durch die Zusatzrolle 4a verdeckt. In Fig. 7 ist die Lagerrolle 5 durch den Messerhalter 9 verdeckt und gestrichelt eingezeichnet. Die unteren Lagerrollen 4, 5 und die Zusatzrollen 4a, 5a spannen in dieser Ausführungsform der Erfindung ein Rechteck auf.

Der Ring 2 weist in der Ausführungsform von Fig. 5 zwei Ausbuchtungen 2a, 2b auf, welche die manuelle Handhabung des Schälwerkzeuges 1 erleichtern.

In einer weiteren Ausführungsform der Erfindung (nicht gezeigt) ist eine der Zusatzrollen 4a, 5a weggelassen. In einer weiteren Ausführungsform (nicht gezeigt) weist das Schälwerkzeug 1 eine weitere Zusatzrolle auf, welche im Bereich des Messers 10 an derjenigen Seite des Rings 2 angeordnet sind, welche von der Schnittkante 11 und den unteren Lagerrollen 4, 5 abgewandt ist.

Fig. 8 zeigt eine alternative Ausführungsform 1a eines erfindungsgemäßen Schälwerkzeuges mit einem Ring 2a, welcher aus zwei in einer Richtung senkrecht zur Achse 14a des Kabels oder Rohres 14 schwenkbar miteinander verbundenen Teilen 21, 22 besteht. Die beiden Teile überlappen sich in ihren Endbereichen und sind über einen Gelenkbolzen 20 so schwenkbar miteinander verbunden, daß sich der Ring 2a durch gegenseitiges Verschwenken der Teile 21, 22 in geöffnetem und in einem geschlossenem Zustand befinden kann, wobei das Kabel oder Rohr im geöffneten Zustand des Rings seitlich in den Ring einführbar ist und im geschlossenen Zustand, welcher in Fig. 8 veranschaulicht ist, eine spielfreie Rundführung des Schälwerkzeuges 1a um das Rohr 14 möglich ist. Die Andruckplatte 12 und die beiden unteren Lagerrollen 4, 5 bilden ein Aufnahmelager für das Rohr 14.

Der Teil 21 weist eine nicht gezeigte Bohrung auf, in welche ein Dorn 23 eingreift, welcher an einem den Teil 21 im Bereich der Bohrung überlappenden Fortsatz des Teils 22 angeordnet ist und zur lösbaren gegenseitigen Arretierung bzw. Verriegelung der Teile 21 und 22 des Rings 2a im geschlossenen Zustand dient.

In einer weiteren Ausgestaltung dieser Ausführungsform weist der Teil 21 zwei oder mehrere in Umfangsrichtung des Rings 2a voneinander beabstandete Bohrungen auf, deren jede den Dorn 23 aufzunehmen imstande ist, so daß der Ring 2a stufenweise auf verschiedene Rohrdurchmesser einstellbar ist.

In einer anderen Ausgestaltung dieser Ausführungsform (nicht gezeigt) weist der Ring 2a anstelle der Bohrung und des Dornes 23 einen z.B. mittels einer Spindel verstellbaren lösbaren Arretier- bzw. Verriegelungsmechanismus auf, mit dem der Ring 2a stufenlos auf verschiedene Rohrdurchmesser einstellbar ist.

In einer besonders vorteilhaften Ausgestaltung der Erfindung (nicht gezeigt) sind die Vortriebsplatte 12 und/oder mindestens eine der unteren unteren Lagerrollen 4, 5 in bezüglich der Rohr- oder Kabelachse 14 radialer Richtung elastisch gefedert angeordnet, so daß sich die Weite des Aufnahmelagers auf verschiedene Rohrdurchmesser einstellen kann.

### Gewerbliche Anwendbarkeit.

Der Gegenstand der Erfindung ist zum Schälen von Schälen von Kabeln oder Rohren, welche insbesondere aus Kunststoff bestehen, geeignet. Das Schälwerkzeug eignet sich insbesondere zum Einsatz an aus Platzgründen schwer zugänglichen Stellen.

Liste der Bezugszeichen:
- 1, 1a: Schälwerkzeug
- 2, 2a: Ring
- 2a, 2b: Ausbuchtungen von 2
- 3: Federschlitz
- 4, 5: untere Lagerrollen
- 4a, 5a: Zusatzrollen
- 6, 7: Lagerbohrungen
- 6a, 7a: Lagerbolzen
- 8: Pendelbohrung
- 8 a: Pendelbolzen
- 9: Messerhalter
- 10: Messer
- 11: Schnittkante
- 12: Vortriebsplatte
- 12a: prismenförmige Erhebung
- 12b: Rinne
- 13: Griff
- 14: Rohr
- 14a: Achse von 14
- 15, 16: Seitenwände von 2
- 15a, 16a: Außenkanten von 15, 16
- 15b, 16b: Innenkanten von 15, 16
- 17: Rückwand von 2
- 18: Griff
- 20: Gelenkbolzen
- 21, 22: Teile von 2a
- 22a: Fortsatz von 22
- 23: Dorn

## Patentansprüche

1. Kompaktes Schälwerkzeug (1, 1a) zum Schälen oder Einschneiden einer äußeren Schicht oder von äußeren Schichten oder des Mantels eines Rohres (14) oder Kabels, insbesondere Kunststoffrohr (14) oder kunststoffbeschichtetes Rohr (14), **gekennzeichnet durch**
- einen Ring (2, 2a), welcher
- entweder aufgrund einer im wesentlichen C-förmigen Gestaltung eine periphere Öffnung aufweist, **durch** welche das Kabel oder Rohr (14) seitlich in den Ring (2) einführbar ist, wobei der Ring (2) das Kabel oder Rohr (14) nach dessen Einführung in den Ring (2) über einen Zentriwinkel von mehr als 180° umschließt und eine spielfreie Rundführung des Schälwerkzeuges (1) um das Kabel oder Rohr (14) erlaubt,
- oder aus wenigstens zwei Teilen (21, 22) besteht, welche schwenkbar miteinander verbundenen sind, so daß sich der Ring (2a) in geöffnetem oder in geschlossenem Zustand befinden kann, wobei das Kabel oder Rohr (14) im geöffneten Zustand des Rings (2a) seitlich in den Ring (2a) einführbar ist und im geschlossenen Zustand das Schälwerkzeug (1a) spielfrei um das Kabel oder Rohr (14) rundführbar ist und die Teile (21, 22) im geschlossenen Zustand mittels einer lösbaren Verriegelung (23) aneinander arretierbar sind,
- und ein am Ring (2, 2a) angeordnetes Messer (10) mit einer Schnittkante (11), welche den Innenkreis des Rings (2, 2a) nach innen in Richtung des Kabels oder Rohres (14) so weit überragt, daß die Schnittkante (11) in die Oberfläche des Kabels oder Rohres (14) einzudringen imstande ist.

2. Schälwerkzeug nach Anspruch 1, **dadurch gekennzeichnet,**
**daß** am Innenkreis des Ringes (2) drei ein Aufnahmelager zur Dreipunktlagerung und Rundführung des Schälwerkzeugs (1) bezüglich des Kabels oder Rohres (14) bildende, den Innenkreis nach innen überragende Auflager angeordnet sind, wovon zwei als voneinander beabstandete untere Gleitlager oder untere Lagerollen (4, 5) ausgebildet sind und das dritte als am Kabel oder Rohr (14) anliegendes Gegenlager fungiert und entweder als oberes Gleitlager oder obere Lagerrolle oder tangential am Kabel oder Rohr (14) anliegende Vortriebsplatte (12) ausgebildet und dem Mittelpunkt der Verbindungsstrecke der unteren Gleitlager oder Lagerrollen (4, 5) im wesentlichen gegenüberliegend angeordnet ist.

3. Schälwerkzeug nach Anspruch 2, **dadurch gekennzeichnet, daß** die Vortriebsplatte (12) unter Druck am Kabel oder Rohr (14) anliegt und an ihrer diesem zugewandten Oberfläche mindestens eine längliche, im wesentlichen prismenförmige Erhebung (12a) oder Rinne (12b) aufweist, die tangential zur Oberfläche des Kabels oder Rohres (14) verläuft und die Ringebene unter einem Winkel (α) schneidet, dessen Tangens kleiner oder gleich dem Verhältnis der Länge der Schnittkante (11) zum Umfang des Kabels oder Rohres (14) ist.

4. Schälwerkzeug nach Anspruch 1 oder 2, **dadurch gekennzeichnet, daß** der Ring (2) zwei einander deckungsgleich gegenüberliegend angeordnete, voneinander parallel beabstandete, im wesentlichen C-förmige Seitenwände (15, 16) und eine gekrümmte Rückwand (17) umfaßt, die parallel zur Oberfläche des Kabels oder Rohres (14) zwischen den Außenkanten (15a, 16a) der beiden Seitenwände (15, 16) verläuft und diese miteinander mechanisch verbindet.

5. Schälwerkzeug nach Anspruch 1 oder 2, **dadurch gekennzeichnet, daß** der Ring (2) mindestens einen radial zur Achse des Kabels oder Rohres (14) verlaufenden, in Richtung des Innenkreises offenen Federschlitz (3) zur Verringerung der Eigensteifigkeit des Ringes (2) gegenüber einer Aufweitung der peripheren Öffnung aufweist.

6. Schälwerkzeug nach Anspruch 4, **dadurch gekennzeichnet, daß** die Achsen der Lagerrollen (4, 5) so angeordnet sind, daß sie jeweils parallel zur Achse des Kabels oder Rohres (14) verlaufen und beide Seitenwände (15, 16) durchstoßen.

7. Schälwerkzeug nach Anspruch 3, **dadurch gekennzeichnet,**
**daß** die Vortriebsplatte (12) parallel zur Achse des Kabels oder Rohres (14) schwenkbar gelagert ist.

8. Schälwerkzeug nach Anspruch 1 oder 2, **dadurch gekennzeichnet,**
**daß** das Gegenlager und/oder die unteren Gleitlager oder unteren Lagerrollen (4, 5) mittels mindestens eines elastischen Bauelementes, insbesondere Druckfeder oder Tellerfeder, gegenüber dem Ring (2) in bezüglich der Achse des Kabels oder Rohres (14) radialer Richtung federnd angeordnet sind.

9. Schälwerkzeug nach Anspruch 3, **dadurch gekennzeichnet, daß** die unteren Gleitlager oder unteren Lagerrollen (4, 5) und die Vortriebsplatte (12) auf einer Kreislinie liegen, deren Durchmesser im unbelasteten Zustand geringer ist als der Durchmesser des Kabels oder Rohres (14) im unbelasteten Zustand, so daß sich die periphere Öffnung bei im Aufnahmelager aufgenommenem Kabel oder Rohr (14) weitet und die Vortriebsplatte (12) auf das Kabel oder Rohr (14) einen mechanischen Druck ausübt.

10. Schälwerkzeug nach Anspruch 3, **dadurch gekennzeichnet, daß** die Vortriebsplatte (12) und/oder die unteren Gleitlager bzw. unteren Lagerrollen (4,5) mit Hilfe eines Verstellmechanismus in Richtung der Achse des Kabels oder Rohres (14) so verstellbar sind, daß durch Betätigen des Verstellmechanismus ein mechanischer Druck zwischen der Vortriebsplatte (12) und der Oberfläche des Kabels oder Rohres (14) erzeugbar ist.

11. Schälwerkzeug nach Anspruch 1, **dadurch gekennzeichnet,**
**daß** das Messer (10) im Bereich des Gegenlagers am Ring (2) angeordnet ist.

12. Schälwerkzeug nach Anspruch 1 oder 2, **dadurch gekennzeichnet,**
**daß** das Messer (10) in bezüglich der Achse des Kabels oder Rohres (14) radialer Richtung verstellbar an dem Schälwerkzeug (1) angeordnet ist, so daß die Dicke der durch das Messer (10) abgetragenen Schicht veränderbar ist.

13. Schälwerkzeug nach Anspruch 1 oder 2, **dadurch gekennzeichnet,**
**daß** am Ring (2) oder einem am Ring angeordneten Messerhalter (9) ein Griff (18) zur Erleichterung des Ausführens einer Drehbewegung des Schälwerkzeuges (1) um das Kabel oder Rohr (14) angeordnet ist, wobei der Griff bevorzugt im Bereich des Gegenlagers am Ring (2) angeordnet ist.

14. Schälwerkzeug nach Anspruch 1, **dadurch gekennzeichnet,**
**daß** am Innenkreis des Ringes (2) mindestens drei jeweils voneinander beabstandete Auflager so angeordnet sind, daß diese den Innenkreis nach innen überragen und am Kabel oder Rohr (14) anliegen und ein Aufnahmelager zur spielfrei rotierbaren Lagerung und Rundführung des Schälwerkzeugs (1) bezüglich des Kabels oder Rohres (14) bilden.

15. Schälwerkzeug nach Anspruch 14, **dadurch gekennzeichnet,**
**daß** wenigstens eines der Auflager in einer Ebene liegt, welche senkrecht zur Achse des Kabels oder Rohres (14) steht und die Schnittkante (11) des Messers (10) schneidet.

16. Schälwerkzeug nach Anspruch 15, **dadurch gekennzeichnet,**
**daß** die Schnittkante (11) des Messers (10) seitlich außerhalb des Rings (2) angeordnet ist.

17. Schälwerkzeug nach Anspruch 16, **dadurch gekennzeichnet,**
**daß** das Schälwerkzeug (1) wenigstens ein Zusatzauflager aufweist, welches den Innenkreis nach innen überragt, am Kabel oder Rohr (14) anliegt und seitlich außerhalb des Ringes (2) an derjenigen Seite des Rings (2) angeordnet ist, welche von der Schnittkante (11) abgewandt ist.
